# EUROPEAN PATENT SPECIFICATION

(11) **EP 2 317 861 B1**
(45) Date of publication and mention of the grant of the patent: **20.03.2013**
(21) Application number: 09803199.0
(22) Date of filing: 29.07.2009
(51) Int. Cl.: A21C 9/08, A21C 13/00, A21B 3/07

(54) **ASSEMBLY FOR SUBJECTING DOUGH PIECES AND/OR BAKERY PRODUCTS TO A DOUGH TREATMENT**
ANORDNUNG ZUR TEIGBEHANDLUNG VON TEIGSTÜCKEN UND/ODER BACKPRODUKTEN
ASSEMBLAGE POUR LE TRAITEMENT DE MORCEAUX DE PATE ET/OU DE PRODUITS DE BOULANGERIE

(30) Priority: 30.07.2008 NL 2001863
(43) Date of publication of application: 11.05.2011
(73) Proprietor: J.H. Kaak Holding B.V., 7061 GA Terborg (NL)
(72) Inventor: Pach, Lothar, 7061 WV Terborgq (NL)
(74) Representative: Peters, Sebastian Martinus
(86) International application number: PCT/NL2009/050466
(87) International publication number: WO 2010/014006

(56) References cited:
- EP-A- 0 827 692
- EP-A- 1 059 034
- DE-U1- 29 908 724
- FR-A- 2 223 945
- FR-A- 2 275 999
- FR-A- 2 593 355
- NL-A- 7 005 305
- US-A1- 2001 025 571

## Description

### BACKGROUND OF THE INVENTION

The present invention relates to an assembly for subjecting dough pieces and/or bakery products to a dough treatment. In particular to an assembly, wherein dough pieces and/or bakery products are supplied at a first side and are discharged at a second side situated opposite the first side.

Proving cabinets, baking ovens and cooling devices provided with a conveyor, such as a belt conveyor or link conveyor are known for conveying dough pieces and/or bakery products placed on the conveyor through the proving cabinet, baking oven or cooling device. A drawback of a belt conveyor or link conveyor, particularly in an oven and cooling device, is that the belt or links at least partially shield the dough pieces and/or bakery products, which impedes and slows down the heating or cooling down of the dough pieces and/or bakery products.

Proving cabinets and baking ovens without conveyor in the proving cabinet or baking oven are furthermore known, wherein use is made of carriers for dough pieces and/or bakery products. In that case carriers placed one behind the other are provided with coupling means for connecting the carriers one to the other and at a discharge side a pulling device is placed for pulling the coupled carriers through the proving cabinet or baking oven as disclosed in EP 0 827 692 which shows a baking oven comprising all the features of the preamble of claim 1. A drawback of the coupled carriers, particularly in a device having a number of dough treatment spaces that are placed above one another, is that the carriers when being entered have to be coupled to the carriers in the dough treatment space and when being discharged have to be uncoupled.

It is an object of the present invention to provide a simplified assembly for subjecting dough pieces to a dough treatment, which assembly only takes up little space.

It is a further object of the present invention to minimise the number of mechanical parts in the proving cabinet, oven or cooling device.

It is a further object of the present invention to make an improved heat exchange possible.

### SUMMARY OF THE INVENTION

One or more of the above-mentioned objects are at least partially achieved with an assembly for subjecting dough pieces to a dough treatment according to claim 1.

Particularly the combination of a pushing device outside of the storeys and a guidance device having a supporting member and a confining members results in a simple conveying device for shifting the carriers through the treatment device without coupling means and conveying means in the device itself. In operation the carriers in the device according to the invention will abut each other loosely and push each other onwards, without the individual carriers being coupled to each other. A coupling device therefore is not necessary in the device according to the invention. The confining member keeps the carriers placed in one storey substantially in the same plane and ensures that the carriers remain behind one another.

The pushing device is adapted for pushing a carrier placed on the first lifting device onwards, over a distance resulting in said carrier being placed entirely in the storey. Furthermore the pushing device is able to develop sufficient force for simultaneously with said carrier also push the carriers that are furthermore present in the storey onwards in series.

According to the invention, a vertical distance between the supporting member and the confining member of a guidance device exceeds a vertical distance between a lower side of the carriers near the supporting member and an upper side of the carriers near the confining member, and wherein the vertical distance between the supporting member and the confining member of the guidance device is smaller than twice the vertical distance between the lower side of the carriers near the supporting member and the upper side of the carriers near the confining member. In that way it is prevented that the carriers within the storey slide at least partially over each other.

In one embodiment the guidance device comprises first and second supporting members that are placed at or near opposite longitudinal side walls of the storey. In one embodiment the guidance device comprises first and second confiding members that are placed at or near opposite longitudinal side walls of the storey. In that way the carriers particularly at their edges that face the longitudinal side walls are supported and/or confined and the rest of the storey can be free from obstructions.

In one embodiment the first supporting member and the first confining member are connected to each other for forming a guidance element. They can be placed as assembled element in the storey.

In a non invention embodiment the guidance element comprises a U-profite, preferably made from one single piece. In that case the base of the U-profile faces a longitudinal side wall, whereas the upright legs of the U-profile form the supporting member and the confining member, respectively.

According to the invention, the supporting member comprises a number of support wheels placed between the inlet and the outlet. The support wheels are placed so as to rotate freely. By letting the carriers rest on the support wheels friction between the carriers and the supporting member can be strongly reduced. Moreover a combination of support wheels and upwardly confinement by the confining member will prevent inadvertent upward tilting of one or more carriers when pushing several carriers that are situated behind one another.

In one embodiment the first and second lifting device are coupled for synchronising their movements. When inserting a carrier into the inlet and pushing the carriers already present in a storey onwards, one carrier will also be pushed out of the outlet. It will in that case be advantageous to synchronise the movement of the fist and second lifting device so that, at least when pushing a carrier inside, they are placed on either side of the same storey.

In one embodiment the pushing device is placed on the first lifting device. In that way the pushing device is able to move along with the lifting device and it will not be necessary to provide each storey with an individual pushing device.

In a simple embodiment the first lifting device comprises support strips for supporting a carrier. In one embodiment the support strips comprise two L-profiles that are spaced apart from each other for accommodating a carrier in between them. In that case the horizontally placed legs of the L-profiles are adapted for supporting the carrier, and the vertically placed legs of the L-profile are adapted for confining the carrier in between them. When placing the lifting device at an inlet of a storey, the L-profiles are placed substantially in the extension of the guidance elements and the pushing device is able to push the carrier on the L-profiles onwards from the L-profiles to the guidance elements.

In one embodiment the first lifting device comprises a conveyor, preferably a belt conveyor. In one embodiment the conveyor comprises a flight that runs along with the conveyor for pushing a carrier placed on the conveyor onwards. In one embodiment the conveyor belt of the belt conveyor comprises a flight projecting from the plane of the belt, which flight is adapted for abutting a side edge of a carrier which side edge faces away from the inlet and, when driving the conveyor, pushing the carrier onwards in the direction of the storey.

In one embodiment the pushing device comprises a linear motor or a pneumatic or hydraulic cylinder which is placed at a side of the lifting device that faces away from the inlet.

In one embodiment the second lifting device comprises a conveyor, preferably a belt conveyor. Said conveyor is able to support the passing of a carrier out of the storey. As the carriers are not coupled to one another, the conveyor, after the carrier has at least partially been pushed out of the storey, is able to pull the carrier further out of the storey and subsequently transfer it to a further conveying device placed consecutive to the second lifting device.

In one embodiment the conveyors of the first and second lifting devices are coupled for synchronising their movements. When inserting a carrier through the inlet and pushing the carriers already present in a storey onwards, one carrier will also be pushed out of the outlet. It will in that case be advantageous to synchronise the entering movement of the carrier on the first lifting device from a pulling movement of the carrier out of the outlet.

In one embodiment, particularly for a proving cabinet, the number of storeys situated above one another has been placed in a common treatment space, particularly in a separate dough treatment space.

In an alternative embodiment, particularly for a storeyed oven, each storey is placed in a separate treatment space, particularly in a separate dough treatment space.

In one embodiment the treatment space comprises an inlet and outlet opening, wherein the inlet and/or the outlet opening are provided with a flap. In that way the treatment space can be substantially closed off in the periods in which no carrier is supplied and/or discharged.

In one embodiment the respective inlets and outlets of the storeys and/or the inlet and outlet openings of the treatment spaces are at least situated substantially vertically above one another.

In one embodiment the number of storeys is at least two.

In one embodiment the storeys are intended for proving, baking or cooling dough pieces and/or bakery products.

The aspects and measures described in this description and the claims of the application and/or shown in the drawings of this application may where possible also be used individually. Said individual aspects may be the subject of divisional patent applications relating thereto. This particularly applies to the measures and aspects that are described per se in the sub claims.

### SHORT DESCRIPTION OF THE DRAWINGS

The invention will be elucidated on the basis of a number of exemplary embodiments shown in the attached drawings, in which:
Figure 1 shows a schematic side view in cross-section of an assembly including oven according to the invention;
Figure 1 A shows a detail of the oven of figure 1;
Figure 2 shows a schematic view in cross-section along the line I-I in figure 1,
Figure 3 shows a schematic view in cross-section of a non inventive first guidance element;
Figure 4 shows a schematic view in cross-section of a second guidance element according to the invention;
Figure 5 shows a schematic side view in cross-section of an assembly including proving cabinet;
Figure 6 shows a schematic view in cross-section along the line II-II of figure 5, and
Figure 7 shows a schematic detail of the guidance elements of the proving cabinet.

### DETAILED DESCRIPTION OF THE DRAWINGS

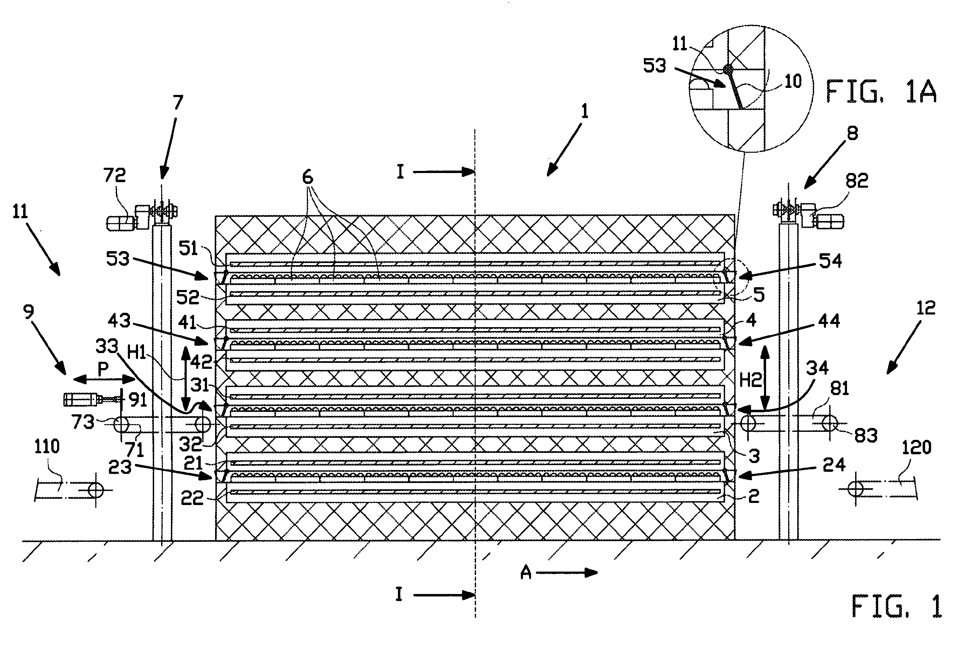

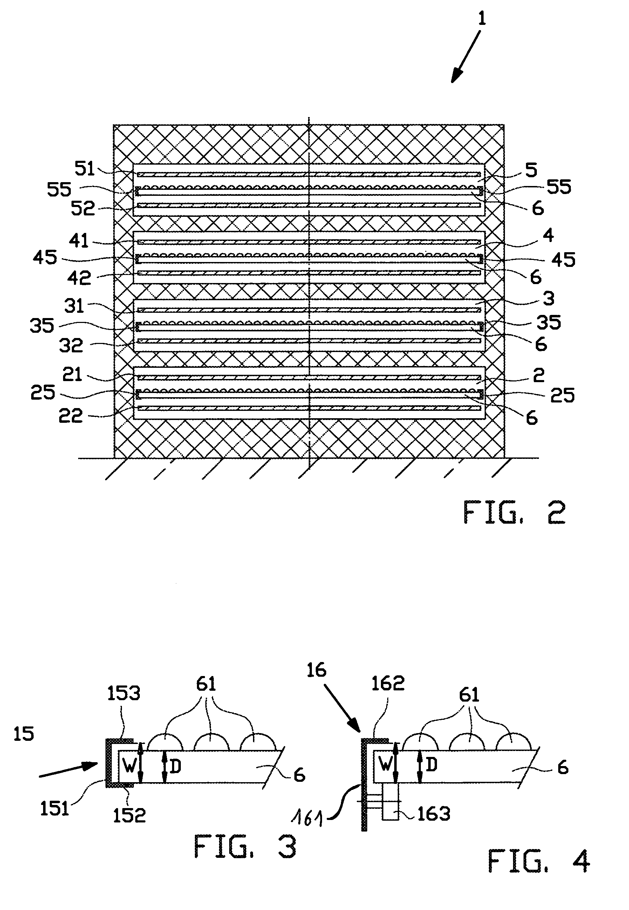

Figures 1 and 2 schematically show a side view and a view in cross-section, respectively, of a first exemplary embodiment of an assembly according to the present invention, comprising an oven 1, a first lifting device 7, a second lifting device 8 and a pushing device 9.

The central part of the assembly is formed by the oven 1. The oven 1 comprises four storeys 2, 3, 4, 5 placed above one another, wherein each storey 2, 3, 4, 5 forms a separate dough treatment space. The several storeys 2, 3, 4, 5 are separated and isolated from one another. Each of the storeys 2, 3, 4, 5 is provided with upper heating elements 21, 31, 41, 51 and lower heating elements 22, 32, 42, 52, in between which the carriers 6 for dough pieces and/or bakery products 61 can be passed. As a result the temperature can be set and controlled per storey.

Each storey 2, 3, 4, 5 is provided with an inlet having inlet opening 23, 33, 43, 53 for passing the carriers 6 into the storey 2, 3, 4, 5, with an outlet having outlet opening 24, 34, 44, 54 for passing the carriers 6 out of the storey 2, 3, 4, 5. Each inlet opening 23, 33, 43, 53 and outlet opening 24, 34, 44, 54 is provided with a flap 10 as shown in more detail in figure 1 A. At its upper side 11 the flap 10 is hinged to the housing of the oven, and is placed such that the flap 10, prior to entering and/or discharging a carrier 6, can be opened in order to make the passage to the storey 2, 3, 4, 5 in question free for entering or discharging the carrier 6. When the carrier 6 has passed the inlet opening 23, 33, 43, 53 and outlet opening 24, 34, 44, 54 the flap 10 can close and substantially close off the storey in question. In one embodiment the flap 10 can be activated and/or operated by an entered and/or discharged carrier 6, moved in the conveyance direction A.

Furthermore each storey 2, 3, 4, 5 is provided with a guidance device in the form of two guidance elements 25, 35, 45, 55 for guiding the carriers 6 from the inlet to the outlet.

A first exemplary embodiment of said guidance elements 15 as schematically shown in figure 3, comprises a U-profile, which preferably is made of one single piece. Here the base 151 of the U-profile faces a longitudinal side wall of the storey 2, 3, 4, 5 in question, whereas the substantially horizontally extending legs of the U-profile, form the supporting member 152 and the confining member 153, respectively. The vertical distance w between the supporting member 152 and the confining member 153 exceeds a thickness d of the side of the carriers 6. Moreover the vertical distance w between the supporting member 152 and the confining member 153 is smaller than twice the thickness d of the carriers 6. In that way, at least considered vertically, only one carrier 6 fits within the U-profile, as a result of which the carriers 6 cannot slide over each other.

Guidance elements 16 according to the invention are schematically shown in figure 4. Said guidance elements 16 comprise an L-profile having a substantially vertically placed leg 161 that faces a longitudinal side wall of the storey 2, 3, 4, 5 in question, and a substantially horizontally extending leg 162 forming the confining member. Spaced apart from the confining member 162 a series of freely rotatable wheels 163 is placed at regular intervals in conveyance direction A, which wheels together form the supporting member. Here as well the vertical distance w between the wheels 163 and the confining member 162 exceeds a thickness d of the side of the carriers 6, and is smaller than twice the thickness d of the carriers 6.

As shown in figure 1 at a supply side 11, from which the carriers 6 are supplied to the assembly, a first lifting device 7 is placed for conveying a carrier 6 to an inlet opening 23, 33, 43, 53 of one of the storeys 2, 3, 4, 5. The carriers 6 are supplied by a conveying device 110, for instance belt conveyor, and transferred to a holder 71 for the carriers 6 of the lifting device 7. The holder 71 can be moved vertically in the direction H1 by a drive 72 of the lifting device 7, until the holder 71 reaches an inlet opening 23, 33, 43, 53 of the desired storey 2, 3, 4, 5. The carrier 6 can then be entered from the holder 71 into the storey 2, 3, 4, 5 in question, particularly be placed between the supporting member 152, 163 and the confining member 153, 162 of the guidance elements 15, 16 of the storey 2, 3, 4, 5 in question.

For entering the carrier 6 the holder 71 is provided with a pushing device 9 having a push surface 91 that can be moved in a substantially horizontal direction P. The pushing device 9 is moved together with the holder 71 in vertical direction H1. For supporting the pushing in, the holder 71 is provided with a conveyor 73, for instance a belt conveyor, which runs substantially synchronous with the push surface 91 during entering a carrier 6 into one of the storeys 2, 3, 4, 5.

As further shown in figure 1, at a discharge side 12, from which the carriers 6 are discharged from the assembly, a second lifting device 8 is placed for receiving a carrier 6 from an outlet opening 24, 34, 44, 54 of one of the storeys 2, 3, 4, 5. When entering a carrier 6 into one of the storeys 2, 3, 4, 5 the series of carriers 6 that is already present in the storey in question, is pushed onwards in the conveyance direction A, as a result of which at the outlet opening 24, 34, 44, 54 a carrier with baked pieces of dough 61 is discharged from the oven 1. Said discharged carrier is accommodated by the holder 81 of the second lifting device 8. When the carrier 6 rests on the holder 81, it can be moved in vertical direction H2 by the drive 82 of the second lifting device 8, and be transferred to a conveying device 120, for instance a belt conveyor, at the discharge side 12, for conveying the carrier 6 further, for instance to a next treatment.

For supporting the discharge of a carrier from a storey 2, 3, 4, 5 the holder 81 is provided with a conveyor 83, for instance a belt conveyor. During the first part of the discharge path, the carrier is substantially pushed onwards by the carriers coming up behind. When the carrier 6 is placed sufficiently far on the conveyor 83, it is able to pull the carrier 6 further out of the storey 2, 3, 4, 5 until the carrier 6 fully rests on the holder 81 and the flap 10 at the outlet opening 24, 34, 44, 54 closes off the storey 2, 3, 4, 5 again.

It will be clear that in the example described above, that the treatment spaces with storeys 2, 3, 4, 5 are situated above one another in the oven 1, whereas the first lifting device 7 with pushing device 9 and the second lifting device 8 are placed outside of the oven 1.

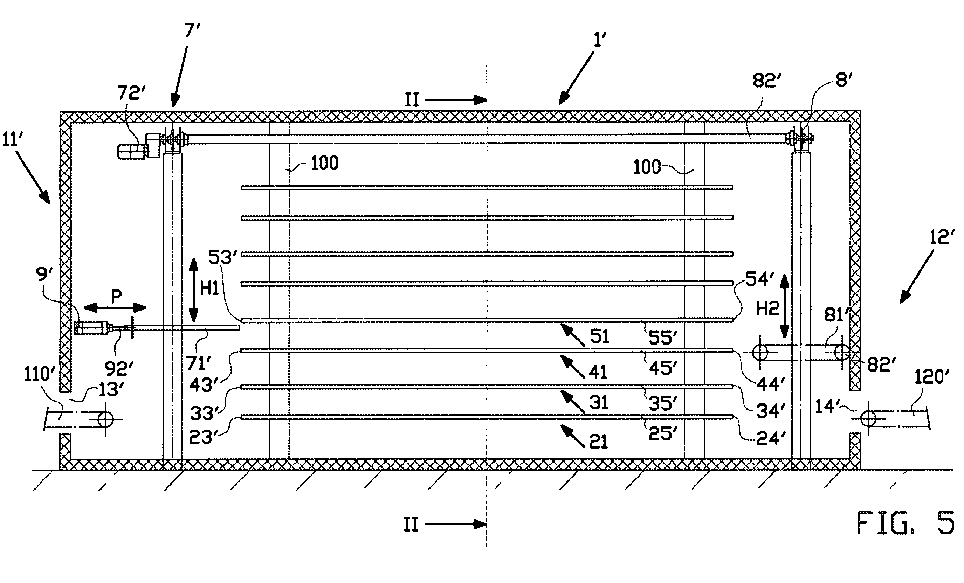

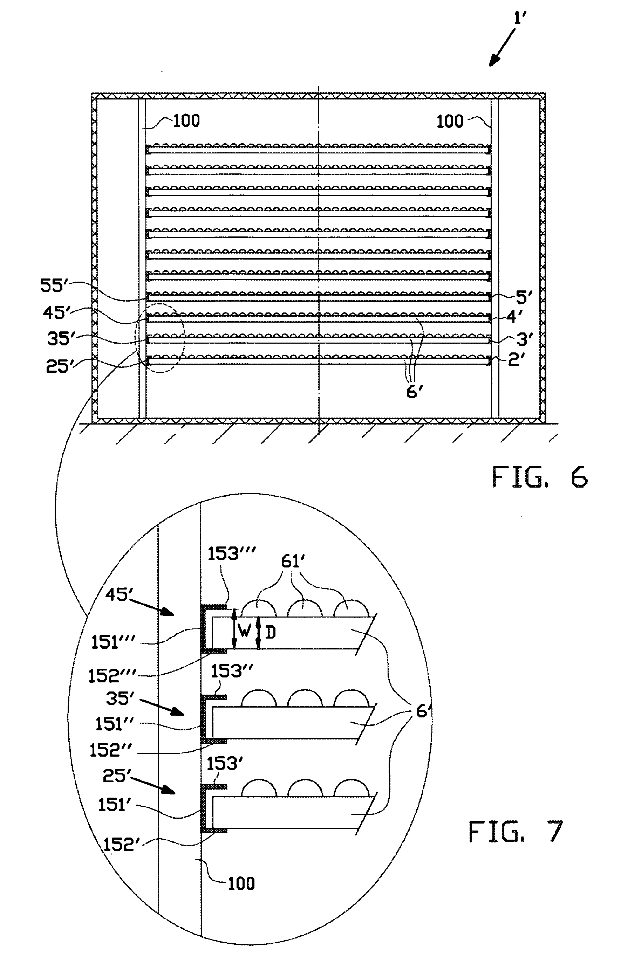

Figures 5 and 6 schematically show a side view and a schematic view in cross-section, respectively, of a second exemplary embodiment of an assembly according to the present invention, comprising a proving cabinet 1', a first lifting device 7', a second lifting device 8' and a pushing device 9'. The proving cabinet 1' comprises a large number of storeys 2', 3', 4', 5', ... placed above one another.

Contrary to the exemplary embodiment including oven of the figures 1 and 2, the storeys 2', 3', 4', 5' situated above one another, the first lifting device 7', the second lifting device 8' and the pushing device 9' have all jointly been placed in one dough treatment space. Each storey 2', 3', 4', 5'... is provided with an inlet 23', 33', 43', 53' ... for passing the carriers 6' into the storey 2', 3', 4', 5'..., with an outlet 24', 34', 44', 54'... for passing the carriers 6' out of the storey 2', 3', 4', 5'... As the assembly is placed substantially in its entirety in one dough treatment space, the proving cabinet 1', it will not be necessary to provide the inlet and outlet with a flap.

Each storey 2', 3', 4', 5'... is provided with a guidance device in the form of two guidance elements 25', 35', 45', 55'... for guiding the carriers 6' from the inlet 23', 33', 43', 53'... to the outlet 24', 34', 44', 54'...

The guidance elements 25', 35', 45' are shown in more detail in figure 7. Said guidance elements 25', 35', 45' comprise a U-profile, preferably made out of one single piece. In that case the base 151', 151", 151"' of the U-profile is attached to a substantially vertical frame 100, whereas the substantially horizontally extending legs of the U-profile, form the supporting member 152', 152", 152'" and the confining member 153', 153", 153"', respectively. Here as well the vertical distance w between the supporting member 152', 152", 152"' and the confining member 153', 153", 153"' exceeds a thickness d, and is smaller than twice the thickness d of the carriers 6'.

As shown in figure 5, at a supply side 11', from which the carriers 6' are supplied to the assembly, a first lifting device 7' is placed for conveying a carrier 6' to an inlet 23', 33', 43', 53' of one of the storeys 2', 3', 4', 5'. The carriers 6' are supplied by a conveying device 110', for instance a belt conveyor, and via an open supply opening 13' transferred onto a holder 71' for the carriers 6' of the lifting device 7'. The holder 71' can be moved vertically in the direction H1 by a drive 72' of the lifting device 7', until the holder 71' reaches an inlet 23', 33', 43', 53' of the desired storey 2', 3', 4', 5'. The carrier 6' can then be entered from the holder 71' into the storey 2', 3', 4', 5' in question.

It is noted here that the conveying device 110' may optionally extend through the through-opening 13' or that the conveying device 120' may extend up to the through-opening 14' in the wall of the proving cabinet 1'. In case of a proving cabinet 1' having only one supply opening 13' and one discharge opening 14' it will not be necessary to provide said openings 13', 14' with a flap.

For entering the carrier 6' the holder 71' is provided with a pushing device 9' with a push surface 91' which can be moved in a substantially horizontal direction P.

In said exemplary embodiment the holder 71' is formed by support strips for supporting a carrier 6'. The support strips two L-profiles placed spaced apart from each other for accommodating a carrier 6' in between them. Here the pushing device 9' can be placed at least partially between the support strips of the holder 71', as a result of which the push axis 92' can be placed at substantially the same level as a side of a carrier 6' placed on the support strips.

As further shown in figure 5, at a discharge side 12', from which the carriers 6' are discharged out of the assembly, a second lifting device 8' is placed for receiving a carrier 6' in a manner comparable to the one described earlier for the first exemplary embodiment. For moving the carrier 82' with conveyor 83' in the vertical direction H2, use is now made of the drive 72' of the first lifting device 7', which via an axle 82' is operationally connected to the second lifting device 8'. In that way synchronisation is achieved in a simple manner, as a result of which the holders 71, 82' of the first and second lifting devices continue substantially at the same level, so both can be placed at the same storey 2', 3', 4', 5'.

When at the supply side 11' a carrier 6' has been entered into one of the storeys 2', 3', 4', 5' from the holder 71' of the first lifting device 7', and at the discharge side 12' the discharged carrier 6' rests on the holder 81', both holders 71', 81' can be moved in vertical direction H1, H2 by the drive 72' 82' up to the level of the supply 110' and discharge 120' conveying devices. The discharged carrier 6' can then be transferred via the open discharge opening 14' to the conveying device 120' at the discharge side 12', and a new carrier 6' from the conveying device 110' at the supply side 11' can be transferred to the holder 71' of the first lifting device 71'.

The above description is included to illustrate the operation of preferred embodiments of the invention and not to limit the scope of the invention.

For instance on the one hand the first and second lifting device of the oven of figure 1 can also be mechanically coupled one to the other, on the other hand the first and second lifting device of the proving cabinet of figure 5 can also be provided with individual drives that are optionally synchronised one with the other.

## Claims

1. Baking oven (1) for subjecting dough pieces and/or bakery products (61) to a dough treatment, comprising:
two or more storeys (2, 3, 4, 5) situated above one another, each for placing a number of carriers (6) for the dough pieces and/or bakery products (61), wherein each storey is provided with an inlet (23, 33, 43, 53) for passing the carriers (6) into the storey (2-5), with an outlet (24, 34, 44, 54) for passing the carriers (6) out of the storey (2-5), and with a guidance device (25, 35, 45, 55, 16) for guiding the carriers (6) from the inlet (23, 33, 43, 53) to the outlet (24, 34, 44, 54), wherein the guidance device comprises a supporting member ( 163) for supporting the carriers (6) and wherein the supporting member (163) comprises a number of support wheels (163) placed between the inlet (23, 33, 43, 53) and the outlet (24, 34, 44, 54),
a first lifting device (7) placed at a supply side for conveying a carrier (6) to an inlet (23, 33, 43, 53) of one of the storeys,
a second lifting device (8) placed at a discharge side for receiving a carrier from an outlet of one of the storeys, and
a pushing device (9) for pushing a carrier (6) placed on the first lifting device (7) into one of the storeys (2-5), wherein when entering the carriers (6) present in the storey (2-5) in question are pushed onwards by the entered carrier (6), **characterized in that**
the guidance device (25, 35, 45, 55, 16) comprises a confining member (162) for in vertical sense confining the carriers (6), wherein a vertical distance (W) between the supporting member (163) and the confining member (162) of a guidance device exceeds the vertical distance (D) between a lower side of the carriers (6) near the supporting member (163) and an upper side of the carriers (6) near the confining member (162) and wherein the vertical distance (W) between the supporting member (163) and the confining member (162) of the guidance device (25, 35, 45, 55, 16) is smaller than twice the vertical distance (D) between the lower side of the carriers (6) near the supporting member (163) and the upper side of the carriers (6) near the confining member (162), wherein the guidance device (16) comprises an L-profile having a substantially vertically placed leg (161) that faces a longitudinal side wall of the storey in question, substantially horizontally extending leg (162) forming the confining member, and a series of freely rotatable wheels (163) placed at regular intervals in conveyance direction (A) and spaced apart from the confining member (162), which wheels together form the supporting member (163), wherein the wheels (163) are connected with their axles to the substantially vertically placed leg (161).

2. Baking oven according to claim 1, wherein the carriers (6) in the guidance device (16) abut each other loosely without the individual carriers (6) being coupled to each other.

3. Baking oven according to claim 1, wherein the guidance device (16) comprises
two guidance elements (25, 35, 45, 55, 16) that are placed at opposite longitudinal side walls of the storey (2 -5).

4. Baking oven according to any one of the preceding claims, wherein the first (7) and second (8) lifting device are coupled for synchronising their movements.

5. Baking oven according to any one of the preceding claims,
wherein the first lifting device (7) comprises a conveyor (73), preferably a belt conveyor, preferably wherein the conveyor comprises a flight that runs along with the conveyor for pushing a carrier placed on the conveyor onwards.

6. Baking oven according to any one of the preceding claims,
wherein the baking oven comprises only one pushing device (9) which is placed on the first lifting device (7).

7. Baking oven according to any one of the preceding claims,
wherein the pushing device (9) comprises a linear motor or a pneumatic or hydraulic cylinder which is placed at a side of the lifting device (7) that faces away from the inlet opening (23, 33, 43, 53).

8. Baking oven according to any one of the preceding claims,
wherein the second lifting device (8) comprises a conveyor (83), preferably a belt conveyor.

9. Baking oven according to claim 8, when dependent on claim 5, wherein the conveyors (73, 83) of the first and second lifting devices (7, 8) are coupled for synchronising their movements.

10. Baking oven according to any one of the preceding claims,
wherein the number of storeys (2 -5) situated above one another have been placed in a common treatment space, particularly in a common dough treatment space, preferably wherein the first and second lifting device (7, 8) are also placed in the common treatment space, preferably wherein the common treatment space comprises an inlet (23, 33, 43, 53) and outlet (24, 34, 44, 54) opening provided with a flag (10).

11. Baking oven according to any one of the claims 1 - 9,
wherein each storey (2 - 5) is placed in a separate treatment space, particularly in a separate dough treatment space, preferably wherein
each separate dough treatment space comprises an inlet (23, 33, 43, 53) and outlet (24, 34, 44, 54) opening provided with a flap (10).

12. Method for subjecting dough pieces and/or baking products to a dough treatment in a baking oven according to any one of the preceding claims, wherein the carriers (6) in the guidance device (25, 35, 45, 55, 16) will abut each other loosely and push each other onward, without the individual carriers (6) being coupled to each other.

## Patentansprüche

1. Backofen (1) zur Teigbehandlung von Teiglingen und/oder Backwerk (61), umfassend:
zwei oder mehr Etagen (2, 3, 4, 5), die übereinander angeordnet sind, jeweils zur Anordnung einer Zahl von Trägern (6) für die Teiglinge und/oder das Backwerk (61), wobei jede Etage mit einem Einlass (23, 33, 43, 53) versehen ist, um die Träger (6) in die Etage (2-5) zu lassen, mit einem Auslaß (24, 34, 44, 54), um die Träger (6) aus der Etage (2-5) zu lassen, und mit einer Führungsvorrichtung (25, 35, 45, 55, 16) zur Führung der Träger (6) vom Einlass (23, 33, 43, 53) zum Auslass (24, 34, 44, 54), wobei die Führungsvorrichtung ein Stützelement (163) zum Stützen der Träger (6) umfasst,
und wobei das Stützelement (163) eine Zahl von stützenden Rädern (163) aufweist, die zwischen dem Einlass (23, 33, 43, 53) und dem Auslass (24, 34, 44, 54) angeordnet sind,
eine erste Hebevorrichtung (7), die an einer Aufgabeseite für den Transport eines Trägers (6) zum Einlass (23,33, 43, 53) einer der Etagen angeordnet ist,
eine zweite Hebevorrichtung (8), die an einer Abgabeseite zur Aufnahme eines Trägers aus dem Auslass einer der Etagen angeordnet ist und
eine Schiebevorrichtung (9) zum Schieben eines Trägers (6), der auf der ersten Hebeeinrichtung (7) platziert ist, in eine der Etagen (2-5) hinein, wobei die Träger (6), die in der fraglichen Etage (2-5) vorhanden sind, beim Einziehen durch den hereinkommenden Träger (6) weitergeschoben werden, **dadurch gekennzeichnet, dass** die Führungseinrichtung (25, 35, 45, 55, 16) ein Begrenzerelement (162) umfasst, zur Begrenzung der Träger (6) im vertikalen Sinne (W), wobei ein vertikaler Abstand zwischen dem Stützelement (163) und
dem Begrenzerelement (162) einer Führungsvorrichtung den vertikalen Abstand (D) zwischen einer unteren Seite des Trägers (6) nahe des Stützelements (163) und einer oberen Seite des Trägers (6) nahe des Begrenzerelements (162) übertrifft, und wobei der vertikale Abstand (W) zwischen dem Stützelement (163) und dem Begrenzerelement (162) der Führungsvorrichtung (25, 35, 45, 55, 16) kleiner ist als zweimal der vertikale Abstand (D) zwischen der unteren Seite des Trägers (6) nahe des Stützelements (163) und der oberen Seite des Trägers (6) nahe des Begrenzerelements (162), wobei die Führungsvorrichtung (16) ein L-Profil aufweist, das einen im wesentlichen vertikal angeordneten Abschnitt (161) hat, welcher einer longitudinalen Seitenwand der fraglichen Etage gegenüberliegt, einen im wesentlichen horizontal sich erstreckenden Abschnitt (162) , welcher das Begrenzungselement bildet, und eine Reihe von frei rotierbaren Rädern (163), die in regelmäßigen Intervallen in Förderrichtung (A) angeordnet sind und
vom Begrenzerelement (162) beabstandet sind, welche Räder zusammen das Stützelement (163) formen, wobei die Räder (163) mit ihren Achsen mit dem im wesentlichen vertikal angeordneten Abschnitt (161) verbunden sind.

2. Backofen nach Anspruch 1, wobei die Träger (6) in der Führungsvorrichtung (16) lose aneinander stoßen ohne dass die individuellen Träger (6) aneinander gekoppelt sind.

3. Backofen nach Anspruch 1, wobei die Führungsvorrichtung (16) zwei Führungselemente (25, 35 45, 55, 16) umfasst, die an den entgegengesetzten longitudinalen Seitenwänden der Etage (2-5) angeordnet sind.

4. Backofen nach einem der vorhergehenden Ansprüche, wobei die erste (7) und zweite (8) Hebeeinrichtung gekoppelt sind, um ihre Bewegungen zu synchronisieren.

5. Backofen nach einem der vorhergehenden Ansprüche, wobei die erste Hebeeinrichtung (7) ein Beförderungsmittel (73) aufweist, vorzugsweise ein Förderband, wobei das Beförderungsmittel vorzugsweise einen Mitnehmer umfasst, der zusammen mit dem Beförderungsmittel läuft, um einen Träger, der auf dem Beförderungsmittel angeordnet ist, vorwärts zu schieben.

6. Backofen nach einem der vorhergehenden Ansprüche, wobei der Backofen nur eine Schiebevorrichtung (9) aufweist, welche auf der ersten Hebeeinrichtung (7) angeordnet ist.

7. Backofen nach einem der vorhergehenden Ansprüche, wobei die Schiebevorrichtung (9) einen Linearmotor oder einen pneumatischen oder hydraulischen Zylinder umfasst, welcher an einer Seite der Hebeeinrichtung (7) angeordnet ist, die von der Einlassöffnung (23, 33, 43, 53) wegzeigt.

8. Backofen nach einem der vorhergehenden Ansprüche, wobei die zweite Hebeeinrichtung (8) ein Beförderungsmittel (83), vorzugsweise ein Förderband aufweist.

9. Backofen nach Anspruch 8, soweit der von Anspruch 5 abhängt, wobei die Beförderungsmittel (73, 83) auf der ersten und zweiten Hebeeinrichtung (7, 8) miteinander gekoppelt sind, um deren Bewegungen zu synchronisieren.

10. Backofen nach einem der vorhergehenden Ansprüche, wobei die Zahl der Etagen (2-5), die übereinander angeordnet sind, in einem gemeinsamen Behandlungsraum angeordnet sind, insbesondere in einem gemeinsamen Teigbehandlungsraum, wobei vorzugsweise die erste und zweite Hebevorrichtung (7, 8) ebenfalls in einem gemeinsamen Behandlungsraum angeordnet sind, wobei der gemeinsame Behandlungsraum vorzugsweise eine Einlass-(23, 33, 43, 53) und Auslassöffnung (24, 34, 44, 54) umfasst, die mit einer Klappe (10) versehen sind.

11. Backofen nach einem der Ansprüche 1-9, wobei jede Etage (2-5) in einem getrennten Behandlungsraum angeordnet ist, vorzugsweise in einem getrennten Teigbehandlungsraum, wobei vorzugsweise jeder getrennte Teigbehandlungsraum eine Einlass- (23, 33, 43, 53) und eine Auslassöffnung (24, 34, 44, 54) aufweist, die mit einer Klappe (10) versehen ist.

12. Verfahren zur Teigbehandlung von Teiglingen und/oder Backwaren in einem Backofen gemäß einem der vorhergehenden Ansprüche, wobei die Träger (6) in der Führungsvorrichtung (25, 35, 45, 55, 16) lose aneinander stoßen und sich gegenseitig vorwärts schieben, ohne dass die einzelnen Träger (6) aneinander gekoppelt sind.

## Revendications

1. Four de cuisson (1) pour soumettre des morceaux de pâte et/ou des produits de boulangerie (61) à un traitement de pâte, comprenant :
deux, ou plus, étagères (2, 3, 4, 5) situées l'une au-dessus de l'autre, chacune étant destinée à placer un certain nombre de transporteurs (6) pour les morceaux de pâte et/ou les produits de boulangerie (61), chaque étagère étant munie d'une entrée (23, 33, 43, 53) pour faire entrer les transporteurs (6) dans l'étagère (2-5), d'une sortie (24, 34, 44, 54) pour faire sortir les transporteurs (6) de l'étagère (2-5), et d'un dispositif de guidage (25, 35, 45, 55, 16) pour guider les transporteurs (6) de l'entrée (23, 33, 43, 53) vers la sortie (24, 34, 44, 54), le dispositif de guidage comprenant un élément support (163) pour supporter les transporteurs (6) et l'élément support (163) comprenant un certain nombre de roulettes de support (163) placées entre l'entrée (23, 33, 43, 53) et la sortie (24, 34, 44, 54),
un premier dispositif de levage (7) placé au niveau d'un côté d'alimentation pour convoyer un transporteur (6) vers l'entrée (23, 33, 43, 53) de l'une des étagères,
un deuxième dispositif de levage (8) placé au niveau d'un côté de déchargement pour recevoir un transporteur à partir de la sortie de l'une des étagères, et
un dispositif de poussée (9) pour pousser un transporteur (6) placé sur le premier dispositif de levage (7) dans l'une des étagères (2-5), dans lequel, lors de leur introduction, les transporteurs (6) présents dans l'étagère (2-5) concernée sont poussés en avant par le transporteur (6) introduit, **caractérisé en ce que**
le dispositif de guidage (25, 35, 45, 55, 16) comprend un élément de confinement (162) pour confiner les transporteurs (6) dans le sens vertical, dans lequel une distance verticale (W) entre l'élément support (163) et l'élément de confinement (162) d'un dispositif de guidage dépasse la distance verticale (D) entre un côté inférieur des transporteurs (6) à proximité de l'élément support (163) et un côté supérieur des transporteurs (6) à proximité de l'élément de confinement (162), et dans lequel la distance verticale (W) entre l'élément support (163) et l'élément de confinement (162) du dispositif de guidage (25, 35, 45, 55, 16) est inférieure au double de la distance verticale (D) entre le côté inférieur des transporteurs (6) à proximité de l'élément support (163) et le côté supérieur des transporteurs (6) à proximité de l'élément de confinement (162), dans lequel le dispositif de guidage (16) a un profil en L ayant une jambe placée sensiblement verticalement (161) qui est orientée vers une paroi latérale longitudinale de l'étagère concernée, une jambe s'étendant sensiblement horizontalement (162) formant l'élément de confinement, et une série de roulettes à rotation libre (163) placées à intervalles réguliers dans la direction de convoyage (A) et écartées de l'élément de confinement (162), lesdites roulettes formant ensemble l'élément support (163), les roulettes (163) étant connectées à l'aide de leurs axes à la jambe placée sensiblement verticalement (161).

2. Four de cuisson selon la revendication 1, dans lequel les transporteurs (6) se trouvant dans le dispositif de guidage (16) butent l'un contre l'autre sans serrer et sans que les transporteurs individuels (6) soient couplés entre eux.

3. Four de cuisson selon la revendication 1, dans lequel le dispositif de guidage (16) comprend deux éléments de guidage (25, 35, 45, 55, 16) qui sont placés au niveau de parois latérales longitudinales opposées de l'étagère (2-5).

4. Four de cuisson selon l'une quelconque des revendications précédentes, dans lequel les premier (7) et deuxième (8) dispositifs de levage sont couplés pour synchroniser leurs mouvements.

5. Four de cuisson selon l'une quelconque des revendications précédentes, dans lequel le premier dispositif de levage (7) comprend un dispositif de convoyage (73), de préférence un convoyeur à courroie, de préférence dans lequel le dispositif de convoyage comprend un taquet qui se déplace avec le dispositif de convoyage pour pousser en avant un transporteur placé sur le dispositif de convoyage.

6. Four de cuisson selon l'une quelconque des revendications précédentes, dans lequel le four de cuisson comprend un seul dispositif de poussée (9) qui est placé sur le premier dispositif de levage (7).

7. Four de cuisson selon l'une quelconque des revendications précédentes, dans lequel le dispositif de poussée (9) comprend un moteur linéaire ou un cylindre pneumatique ou hydraulique qui est placé au niveau d'un côté du dispositif de levage (7) qui est en face de l'ouverture d'entrée (23, 33, 43, 53).

8. Four de cuisson selon l'une quelconque des revendications précédentes, dans lequel le deuxième dispositif de levage (8) comprend un dispositif de convoyage (83), de préférence un convoyeur à courroie.

9. Four de cuisson selon la revendication 8, dans sa dépendance de la revendication 5, dans lequel les dispositifs de convoyage (73, 83) des premier et deuxième dispositifs de levage (7, 8) sont couplés pour synchroniser leurs mouvements.

10. Four de cuisson selon l'une quelconque des revendications précédentes, dans lequel la pluralité d'étagères (2-5) situées l'une au-dessus de l'autre a été placée dans un espace de traitement commun, en particulier dans un espace de traitement de pâte commun, de préférence dans lequel les premier et deuxième dispositifs de levage (7, 8) sont aussi placés dans l'espace de traitement commun, de préférence dans lequel l'espace de traitement commun comprend une ouverture d'entrée (23, 33, 43, 53) et de sortie (24, 34, 44, 54) munie d'un volet (10).

11. Four de cuisson selon l'une quelconque des revendications 1 à 9, dans lequel chaque étagère (2-5) est placée dans un espace de traitement séparé, en particulier dans un espace de traitement de pâte séparé, de préférence dans lequel chaque espace de traitement de pâte séparé comprend une ouverture d'entrée (23, 33, 43, 53) et de sortie (24, 34, 44, 54) munie d' un volet (10).

12. Procédé pour soumettre des morceaux de pâte et/ou des produits à cuire à un traitement de pâte dans un four de cuisson selon l'une quelconque des revendications précédentes, dans lequel les transporteurs (6) se trouvant dans le dispositif de guidage (25, 35, 45, 55, 16) butent l'un contre l'autre sans serrer et se poussent entre eux vers l'avant, sans que les transporteurs individuels (6) soit couplés entre eux.
